# EUROPÄISCHE PATENTSCHRIFT

(11) **EP 1 015 162 B1**
(45) Veröffentlichungstag und Bekanntmachung des Hinweises auf die Patenterteilung: **24.09.2003**
(21) Anmeldenummer: 97951078.1
(22) Anmeldetag: 11.11.1997
(51) Int. Cl.: B23K 20/12, B23K 20/16

(54) **VERFAHREN UND VORRICHTUNG ZUM VERBINDEN VON BAUTEILEN**
PROCESS AND DEVICE FOR JOINING COMPOSANTS
PROCEDE ET DISPOSITIF POUR JOINDRE DES COMPOSANTS

(30) Priorität: 11.11.1996 DE 19647707
(43) Veröffentlichungstag der Anmeldung: 05.07.2000
(73) Patentinhaber: Untergrundspeicher- und Geotechnologie-Systeme GmbH, 15749 Mittenwalde (DE)
(72) Erfinder: Faber, Thomas, 14482 Potsdam (DE)
(74) Vertreter: Radwer, Dieter
(86) Internationale Anmeldenummer: DE9702668
(87) Internationale Veröffentlichungsnummer: WO98021002

(56) Entgegenhaltungen:
- EP-A- 0 396 204
- DE-A- 2 020 121
- DE-A- 2 329 080
- A.N. SHAITATROV: "The control evaluation of the prarameters of the friction welding of pipes through interpiece" WELDING PRODUCTION., Bd. 27, Nr. 12, 1980, CAMBRIDGE GB, Seiten 15-16, XP002061624
- PATENT ABSTRACTS OF JAPAN vol. 007, no. 095 (M-209), 21.April 1983 & JP 58 020389 A (KAWASAKI JUKOGYO KK), 5.Februar 1983,

## Beschreibung

Die Erfindung betrifft ein Verfahren gemäß dem Oberbegriff des Anspruchs 1 (ein solches Verfahren ist aus A.N.SHAITATROV et al.: "The control and calculation of the parameters of the friction welding of pipes through an interpiece", WELDING PRODUCTION, Bd. 27, Nr. 12, Cambridge (GB), Seiten 15,16 bekannt) zum Verbinden von Bauteilen, wie Rohre, Stangen und dergleichen Halbzeuge, durch Reibschweißen, insbesondere zum Verbinden von Rohren beim Niederbringen von Tiefbohrungen und/oder zum Komplettieren von Bohrungen, beispielsweise Kavernenbohrungen.

Zum Verbinden von Rohrabschnitten in vertikaler Ausrichtung ist aus DE-OS 20 20 121 ein Verfahren bekannt, bei dem mindestens ein Ende der zu verbindenden Rohrabschnitte mit einer Abschrägung versehen wird, die als Schweißfuge dient. In die so gebildete Schweißfuge werden mit Hilfe einer Schweißvorrichtung mehrere Schweißlagen eingebracht, um die Bauteile miteinander zu verbinden. Die Schweißvorrichtung besteht aus einer Konsole, die an einem der zu verbindenden Rohrabschnitte koaxial zu ihrer gemeinsamen Längsachse befestigt wird und aus einem Schweißkopf, der zum Einbringen eines Schweißmetalls in die Schweißfuge, gestützt und gehalten auf der Konsole, entlang des Außenmantels der zu verbindenden Rohrabschnitte auf einer Kreisbahn verfahrbar ist. Der Schweißkopf ist ferner mit Mitteln ausgerüstet, um seine horizontale Stellung in Relation zu dem Außendurchmesser der zu verbindenden Rohrabschnitte radial zu verstellen.

Die Lösung nach DE-OS 20 20 121, die bei gegebenen Voraussetzungen vor Ort für die Herstellung von Verrohrungen in Tiefbohrungen eingesetztbar erscheint, ist anlagenseitig und bezüglich der vorgesehenen Verfahrenstechnologie sehr aufwendig, da zum sicheren Verbinden der Rohrabschnitte stets ein schmelzflüssig zu machender Schweißzusatzstoff verwendet und mehrere Schweißlagen in die Schweißfuge eingebracht werden müssen. Das Ein- und Ausrichten der Schweißvorrichtung erfordert zudem weiteren Zeitaufwand.

Ein gegenüber der vorgenannten Lösung verbessertes, sogenanntes radiales Reibschweißverfahren zum Verbinden von Tubing- und Casingrohren ist aus der GB-Patentanmeldung 8910118.2 bekannt. Nach dieser Lösung werden die miteinander zu verbindenden Rohre mit Hilfe der Schweißvorrichtung in vertikaler Ausrichtung zentriert und ein Schweißring, der zuvor an der Verbindungsstelle des unteren Rohres aufgesetzt worden ist, in Relation zu den zentrierten Rohren unter gleichzeitiger Beaufschlagung mit radialen Druckkräften in eine Drehbewegung versetzt. Mit der auf diese Weise erzeugten Reibungswärme, die einen schweißfähigen plastifizierten Zustand der Werkstoffe der am Fügeprozeß beteiligten Bauelemente hervorruft, wird eine Reibschweißverbindung zwischen dem Reibring und den Endabschnitten der zu verbindenden Rohre hergestellt, wobei der Schweißring im Bereich der Verbindungsstelle praktisch in die Rohrenden eingewalzt wird und einen stofflichen Verbund herstellt.

Die Durchführung dieses radialen Reibschweißverfahrens erfordert gesondert anzufertigende, auf die jeweiligen geometrischen Abmessungen und Werkstoffe der zu verbindenden Rohre genau abgestimmte Schweißringe, da nach Beendigung des Schweißvorganges der Schweißring sowohl stofflich als auch geometrisch Bestandteil der erzeugten Verbindung ist.

Der Verbleib des Schweißringes als Bestandteil der Verbindung kann in Abhängigkeit von der Ausgangsgeometrie des Schweißringes und dem spezifischen Prozeßablauf zu einer in der Höhe dem Schweißring entsprechenden, im Unterschied zum Schweiß- und Stauchgrat massiven, Vergrößerung des Außendurchmessers im Bereich der Verbindungsstelle führen.

Bei Gewährleistung vorgegebener Außendurchmesser führt diese massive Durchmesservergrößerung im Vergleich zur Beseitigung des Schweiß- und Stauchgrates zu aufwendigeren technologischen Maßnahmen bei der Abarbeitung. Bedingt durch die Anpassung des Schweißringes an die jeweiligen geometrischen Abmessungen der zu verbindenden Rohre sind außerdem hohe maschinentechnische Aufwendungen für das sichere Spannen und Bewegen des Schweißringes erforderlich.

Ein Verfahren und eine Vorrichtung zum Stumpfschweißen von Rohren oder dergleichen in horizontaler Ausrichtung durch Erhitzen der Kontaktflächen auf Schweißtemperatur mittels Reibungswärme aufgrund einer Relativdrehung der Kontaktflächen bei einer gleichzeitig einwirkenden gegengerichteten Druckkraft ist bereits Gegenstand der DE-OS 23 29 080.

Die für den Stoffverbund erforderliche Schweißtemperatur wird mit Hilfe eines angetriebenen Metallringes passender Größe und Dicke erzeugt, der in Stoßanlage zwischen den zu verbindenden Rohren eingesetzt wird. Nach Erreichen der Schweißtemperatur wird das Drehen des Ringes gestoppt und durch Aufbringen einer Schlußdruckkraft zwischen den Rohren der Schweißverbund zwischen diesen und dem eingesetzen Ring hergestellt.

Dieses Verfahren besitzt im wesentlichen die gleichen Nachteile, die vorstehend näher dargelegt sind. Der zur Erzeugung der Schweißtemperatur mittels Reibungswärme eingesetzte und angetriebene Reibring muß auf die Größe und die Wanddicke der zu verbindenden Rohre abgestimmt werden. Weiterhin müssen zum Verbinden von zwei Rohren statt einer zwei Schweißnähte erzeugt werden. Dadurch ist einerseits die für eine Qualitätssicherung notwendige Parameterüberwachung für den Reib- und Stauchdruck und die Reib- und Stauchverkürzung für die zwei gleichzeitig stattfindenden Schweißvorgänge mit getrennter Auswertung nur aufwendig realisierbar. Andererseits sind erhöhte technologische Maßnahmen zur Reib- und Stauchgratbeseitigung die Folge.

Darüber hinaus ist bei dem letztgenannten Verfahren von Nachteil, daß das Drehmoment, das zur Erzeugung der Reibungswärme auf den Reibungsring übertragen worden ist, zur Herstellung der Schweißverbindung zumindest teilweise abgebaut werden muß, bevor die erhöhte Anpreßkraft zur Herstellung der Schweißverbindung aufgebracht werden kann.

Zur Überleitung des Reib- in den Schweißvorgang (Stauchen) beim Reibschweißen von Verbindungen wie in DE-OS 23 29 080 werden üblicherweise verschiedene Prozeßkenngrößen, wie z.B. die Längenverkürzung pro Zeiteinheit, die Konstanz des Reibmomentes über die Zeit u.a., benötigt. Neben der Erfassung von Steuergrößen ist eine relativ aufwendige Meßwertverarbeitung, z.B. der Vergleich mit toleranzbehafteten Vorgabewerten, die fügequerschnitts- und werkstoffabhängig sind und meist vor Beginn der Fertigung durch Versuchsschweißungen ermittelt werden, notwendig. Alle diese notwendigen Vorarbeiten verursachen zusätzliche Aufwendungen und Kosten.

Diese obengenannten Nachteile standen bisher einer breiten Anwendung des Schweißens von Rohrsträngen auf einem Bohrturm entgegen, wodurch die mit dem Schweißen von Rohrverbindungen verbundenen Vorteile, wie Verbesserung der Ringraumspiele, Senkung der Aufwendungen für die Verrohrungen, Spülungen, Entsorgungen und dergleichen bisher nicht in Anspruch genommen werden konnten.

Der Erfindung liegt die Aufgabe zugrunde, ein Verfahren und eine Vorrichtung zur Herstellung von Reibschweißverbindungen an Bauteilen zu entwickeln, das unabhängig vom Fügequerschnitt und der am Reib- und Schweißprozeß beteiligten Werkstoffe unter Nutzung leicht erfaß- und bestimmbarer Prozeßkenngrößen durchgeführt werden kann.

Erfindungsgemäß wird die Aufgabe durch ein Verfahren gemäß den Merkmalen nach Anspruch 1 gelöst. Weitere vorteilhafte Ausführungen der erfindungsgemäßen Lösung ergeben sich aus den Unteransprüchen 2 bis 7.

In an sich bekannter Weise wird die für die Schweißverbindung zweier Bauteile notwendigte Schweißtemperatur durch Reibungswärme aufgebracht, die durch Rotation einer Reibelementes zwischen den zu fügenden, fest eingespannten Bauteilen unter Aufbringung eines gleichmäßigen Druckes zwischen den Stirnflächen der Bauteile und des Reibelementes bei Längenabnahme der Bauteile und Dickenabnahme der Scheibe erzeugt wird.

Erfindungsgemäß wird entsprechend den Merkmalen nach Anspruch 1 eine einfache Reibscheibe verwendet und nach Erreichen eines quasi stationären Temperaturfeldes im Bereich der Verbindungsstelle, in dem die zugeführte und die abfließende Wärmemenge an den Enden der zu fügenden Bauteile annähernd gleich groß ist, der Reibprozeß mit einem nahezu konstanten Reibmoment bei proportionaler Längenverkürzung der zu verbindenden Bauteile bis zum vollständigen Verdrängen des Reibscheibenmaterials an den am Reibprozeß beteiligten Kontaktflächen weiter fortgesetzt und unmittelbar nach dem Verbrauch der Reibscheibe die gegengerichteten Druckkräfte, mit denen die Bauteile beaufschlagt worden sind, erhöht und durch Stauchen eine stoffliche Verbindung der plastifizierten Enden der zu verbindenden Bauteile vorgenommen.

Mit dieser erfindungsgemäßen Reibschweißtechnologie kann der gesamte Reib- und Schweißvorgang wesentlich vereinfacht und kostengünstiger gestaltet werden, da die bisher notwendige Bestimmung der für den Prozeßablauf notwendigen Steuergrößen sowie die fügequerschnitts- und werkstoffabhängigen Vorgabewerte, die bisher meist vor Beginn der Fertigung durch Versuchsschweißungen ermittelt wurden, nicht mehr erforderlich sind.

Gegenüber den bisher bekannten Verfahren und Einrichtungen ermöglicht die erfindungsgemäße Lösung das Verbinden von Bauteilen durch Reibschweißen bei dem die miteinander verbundenen Bauteile in ihrer Fügezone keine Zusatzwerkstoffe aufweisen und nur eine einzige Verbindungsstelle besitzen.

Mit der Verwendung eines Reibelementes in Form einer Reibscheibe, die während des Reibprozesses im Bereich der Kontaktflächen vollständig verdrängt wird, ist eine exakte Abstimmung des Reibelementes zu den Abmessungen und den Grundwerkstoffen der zu verbindenden Bauteile nicht mehr zwingend erforderlich.

Mit einer Reibscheibe, die einfach und kostengünstig herstellbar ist, können dadurch Bauteile, beispielsweise Rohre, mit unterschiedlichen Bauteilgeometrien in Durchmesser und Wanddicke innerhalb eines großen Abmessungsbereiches durch Reibschweißverfahren miteinander verbunden werden. Der Einsatz einer Reibscheibe für unterschiedliche Bauteilgeometrien führt ferner auch zu wesentlichen Einsparungen bei den maschinentechnischen Aufwendungen für das Spannen und den Drehantrieb des Reibelementes. Die technischen Mitteln zum Spannen und Bewegen des Reibelementes begrenzen somit nur noch in eingeschränktem Maße die mit Anwendung der Erfindung realisierbaren Fügequerschnitte und ihren Einsatz bei häufig wechselnden Außendurchmesser und Wanddicke der zu verbindenden Bauteile.

Nach den Merkmalen der Verfahrensansprüche 3, 4 und den Ansprüchen 6 und 7 kann die Reibscheibe mit einer Ringnut versehen werden, die den während des Reibprozesses entstehenden Reibgrat entlang den Wandungen der zu verbindenden Bauteile kontinuierlich umformt.

Gemäß einer vorteilhaften Ausbildung besitzt die Reibscheibe in radialer Anordnung zwei gegenüberliegende Aussparungen, in denen Schneidwerkzeuge, beispielsweise Drehstähle, verstellbar angeordnet sind, um den Reib- und Stauchgrat während des Reibprozesses und nach Beendigung des Stauchvorganges unter Ausnutzung und Aufzehrung der auf die Reibscheibe übertragenen Rotationsenergie abzutrennen.

Nach den bisher bekannten Reibschweißverfahren unter Verwendung eines rotierenden Reibelementes muß das Reibelement vor dem Aufbringen des Stau-/Stauchdrukkes in der Regel bis zum Stillstand abgebremst werden, wobei die Bremszeit 0,5 sec nicht überschreiten soll, um ein vorzeitiges Abkühlen der zu fügenden Bauteile im Verbindungsbereich zu verhindern. Je nach Masse des rotierenden Reib- oder Bauelementes sind hierfür aufwendige Bremssysteme notwendig, die einem starken Verschleiß unterliegen. Mit der vorgeschlagenen erfindungsgemäßen Lösung kann auf derartige Bremseinrichtungen zur Aufhebung der Relativbewegung zwischen den zu fügenden Teilen und dem Reibelement verzichtet werden.

Gleichzeitig ist gewährleistet, daß der im Reib- und Stauchprozeß entstehende Grat die Fließbedingungen der Werkstoffe beim Fügen der zu verbindenden Bauteile nur in geringer oder unwesentlicher Weise beeinträchtigt und auf einfache kostengünstige Weise beseitigt wird. Die bisher notwendigen technologischen Maßnahmen, um den Reib- und Stauchgrat in Abhängigkeit von der geforderten Ausführungsqualität bzw. der einzuhaltenden Außen- und/oder Innendurchmesser von Rohren zu beseitigen, können dadurch entfallen.

Die Erfindung soll nachstehend an einem Ausführungsbeispiel näher erläutert werden. In den dazugehörigen Zeichnungen zeigen:
- Fig. 1 -: eine schematische Darstellung der Anordnung der am Schweißvorgang beteiligten Elemente zum Beginn des Reibschweißprozesses
- Fig. 2 -: den Schnitt A - A aus Fig. 1
- Fig. 3 -: die Fortsetzung des Reibprozesses bis zum vollständigen Verdrängen des Reibscheibenmaterials nach Erreichen eines quasi stationären Temperaturfeldes
- Fig. 4 -: das Fügen der zu verschweißenden Bauteile durch Stauchen mit einem erhöhten Anpreßdruck
- Fig. 5 -: eine schematische Darstellung der erfindungsgemäßen Reibscheibe
- Fig. 6 -: den Schnitt B - B nach Fig. 5
- Fig. 7 -: den Schnitt C - C nach Fig. 5

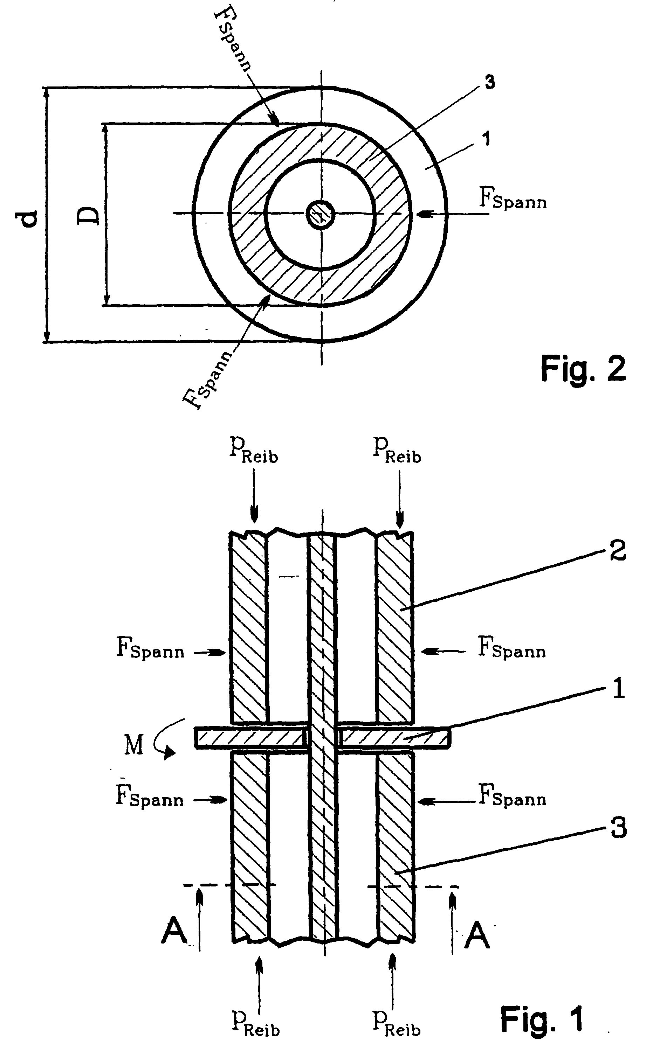

Wie in Fig. 1 und 2 schematisch dargestellt, sind die durch Reibschweißen miteinander zu verbindenden Bauteile 2; 3, beispielsweise Rohre, in axialer Richtung gegeneinander verstellbar angeordnet und gegen Rotation durch Spannkräfte F_{Spann} gesichert. Zwischen den Stirnflächen der Bauteile 2; 3 ist eine Reibscheibe 1 angeordnet, die von einer Antriebseinheit - nicht dargestellt - zur Erzeugung der Schweißtemperatur durch Reibungswärme angetrieben wird. Der Außendurchmesser der Reibscheibe ist vorteilhafterweise so gewählt, daß der Fügedurchmesser D und der Antriebsdurchmesser d nicht voneinander abhängig sind.

Der mögliche Fügequerschnitt wird somit nicht durch die Antriebseinheit begrenzt. Außerdem können voneinander abweichende Bauteilgeometrien mit ein und derselben Reibscheibengröße und einer einzigen maschinentechnischen Ausrüstung verbunden werden.

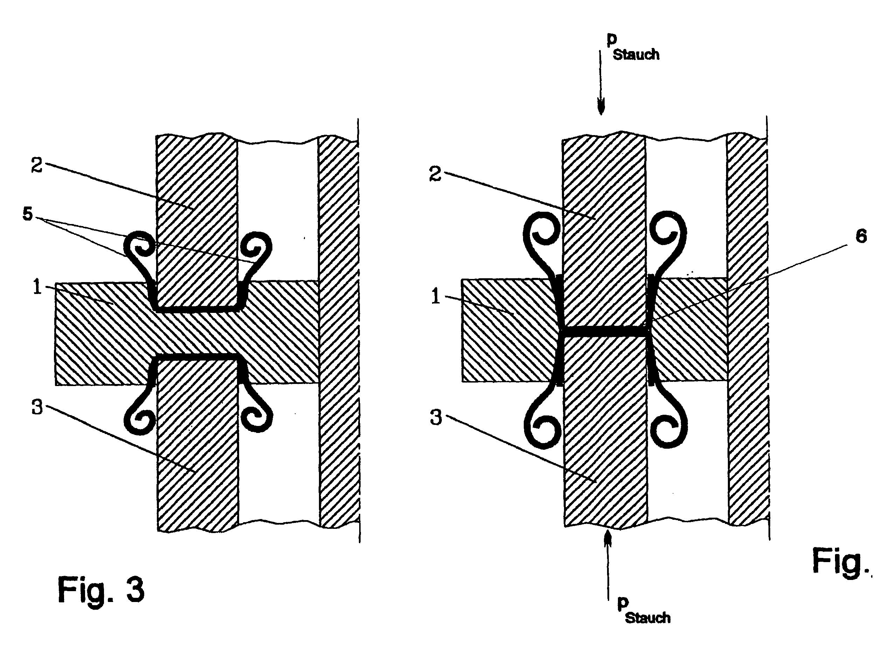

Die für den Schweißprozeß notwendigen Wärmemengen werden auf bekannte Weise durch Reibungswärme erzeugt, indem die Reibscheibe 1 mit einem Drehmoment M beaufschlagt und mit Hilfe der Antriebseinheit um eine zu den Bauteilen 2 und 3 und der Reibscheibe 1 gemeinsamen Drehachse gedreht wird. Unter Aufbringung eines gleichmäßigen Anpreßdruckes P_{Reib} zwischen den Stirnflächen der Bauteile 2; 3 und der Reibscheibe 1 bei einer Längenverkürzung der Bauteile 2; 3 und einer Dickenabnahme der Reibscheibe 1 der Reibprozeß bis in einem quasi stationären Temperaturfeld im Bereich der Enden der zu verbindenden Bauteile 2; 3 geführt - Fig. 3. Nach Erreichen dieses Temperaturfeldes wird der Reibvorgang bis zum vollständigen Verbrauch der Reibscheibe 1 im Bereich der Kontaktflächen zwischen Reibscheibe 1 und den Bauteilen 2 und 3 weiter geführt. Nach Beendigung des Reibvorganges, d.h. nachdem die Reibscheibe 1 vollständig "durchgerieben" ist, wird der Anpreßdruck P_{Reib} erhöht und durch Stauchen eine stoffliche Verbindung der durch die Reibwärme erhitzten und in einen plastifizierten Zustand überführten Enden der Bauteile 2 und 3 hergestellt.

Zur Steuerung dieses Prozesses werden die sich sprunghaft ändernden Prozeßkenngrößen, wie beispielsweise das Drehmoment für den Antrieb des Reibelementes, das sich durch das vollständige Verdrängen der Reibscheibe 1 verändert, eingesetzt.

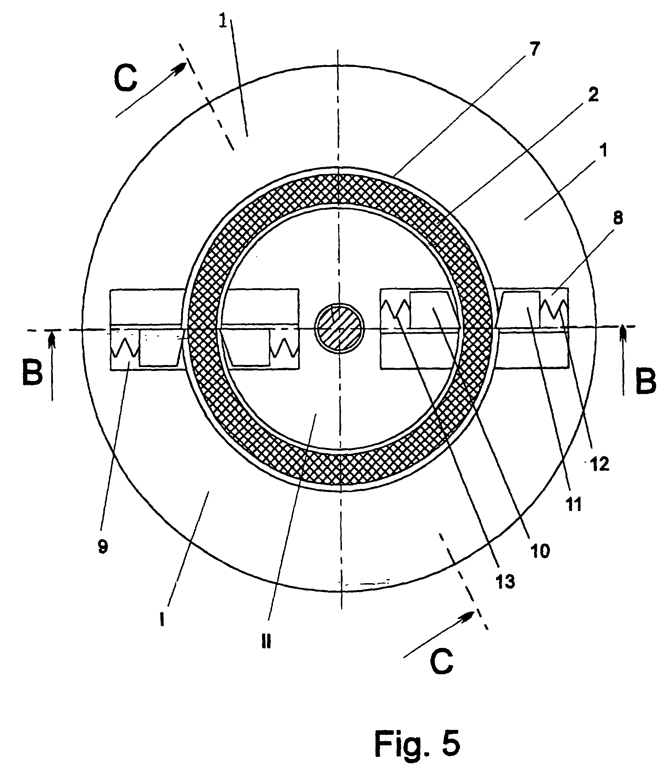

Im Stauchvorgang werden die in der Verbindungszone verbliebenen Werkstoffanteile des Reibelementes 1 mit dem Stauchgrat 5 aus der Fügezone herausgepreßt, so daß die fertiggestellte Schweißnaht 6 im wesentlichen aus den Grundwerkstoffen der zu verbindenden Bauteile 2 und 3 besteht - Fig. 4.

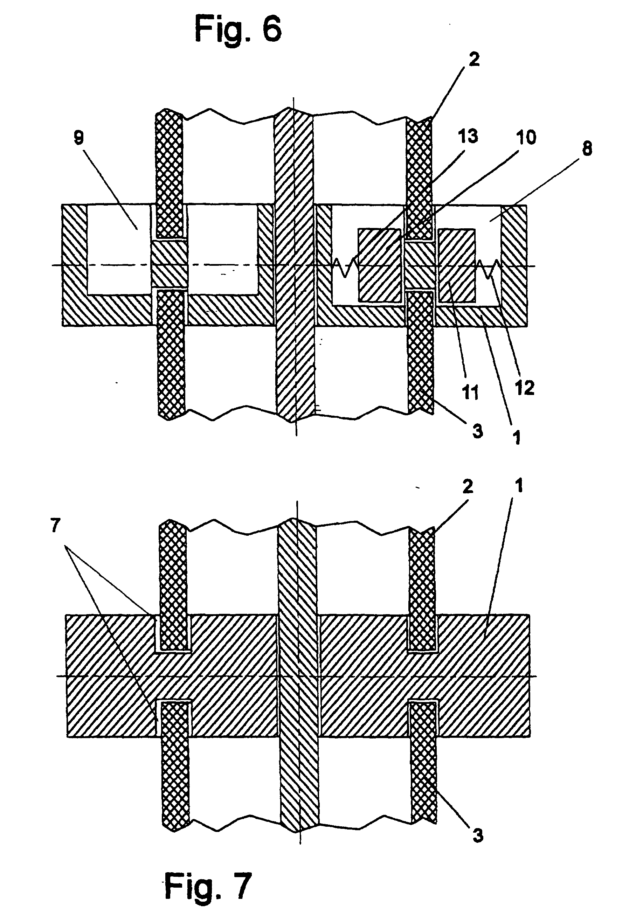

Gemäß Fig. 5 bis 7 wird der während des Reibprozesses anfallende Reibgrat durch die in der Reibscheibe 1 vorgesehenen resps. während des Reibprozesses entstehenden Ringnuten 7 kontinuierlich umgeformt.

Nach Abschluß des Reib- und Fügeprozesses wird der Reib- und Stauchgrat 5 mit Hilfe der Schneidwerkzeuge 10; 11 abgetragen, die in den Aussparungen 8; 9 der Reibscheibe 1 angeordnet und mittels Federn 12;13 in radialer Richtung gegen die zu verbindenden Bauteile 2 und 3 vorgespannt sind. Für das Abtragen des Reibund Stauchgrates 5 wird die nach Durchreiben der Reibscheibe 1 in den Teilstücken I und II verbleibende Rotationsenergie bis zum vollständigen Abbremsen der Teilstücke I und II ausgenutzt.

### Bezugszeichenaufstellung

- 1: Reibscheibe
- 2: Bauteil
- 3: Bauteil
- 4: -
- 5: Reib- und Stauchgrat
- 6: Schweißnaht
- 7: Ringnut
- 8: Aussparung
- 9: Aussparung
- 10: Schneidwerkzeug
- 11: Schneidwerkzeug
- 12: Feder
- 13: Feder

## Patentansprüche

1. Verfahren zum Verbinden von Bauteilen, wie Rohre, Stangen und dergleichen Halbzeuge, durch Reibschweißen unter Verwendung eines Reibelementes (1), das in Stoßlage zwischen den zu verbindenden Enden der Bauteile (2,3) angeordnet und zur Erzeugung der Schweißtemperatur durch Reibungswärme bei gleichzeitiger auf die Kontaktflächen zwischen Reibelement und Bauteilenden einwirkender Druckkräfte um eine zu den Bauteilen und dem Reibelement gemeinsamen Achse gedreht und für den Fügeprozeß die verbindenden Bauteile nach Aufhebung der Drehbewegung mit höheren, gegengerichteten Druckkräften beaufschlagt wird, **dadurch gekennzeichnet, daß** nach Erreichen der Schweißtemperatur innerhalb eines quasi stationären Temperaturfeldes der Reibvorgang unter Verdrängung des Materials des Reibelementes an den am Reibprozess beteiligten Flächen bis zum gegenseitigen Kontakt der Enden der zu fügenden Bauteile (2,3) fortgesetzt, danach die Bauteile (2,3) mit einem erhöhten Anpreßdruck beaufschlagt und durch Stauchen miteinander verschweißt werden und gleichzeitig der während des Reib- und Stauchvorgang entstandene Reib- und Stauchgrat abgetragen wird.

2. Verfahren nach Anspruch 1, **dadurch gekennzeichnet, daß** bei Erreichen der Schweißtemperatur und Ausbildung eines stationären Temperaturfeldes im Bereich der Verbindungsstelle an den Enden der zu verbindenden Bauteile (2,3) der Reibvorgang mit nahezu konstantem Reibmoment bei proportionaler Längenverkürzung der am Schweißprozeß beteiligten Bauteile (2,3) bis zum vollständigen Verdrängen des Materials des Reibelementes an den am Reibprozeß beteiligten Kontaktflächen fortgeführt wird.

3. Verfahren nach Anspruch 1, **dadurch gekennzeichnet, daß** der Reibgrat aus plastifiziertem Werkstoff des Reibelementes (1) und der zu verbindenden Bauteile während des Reibprozesses kontinuierlich umgeformt wird.

4. Verfahren nach Anspruch 1 und 2, **dadurch gekennzeichnet, daß** die durch das vollständige Verdrängen des Materials des Reibelementes (1) sich sprunghaft ändernden Prozeßkenngrößen zur Prozeßsteuerung eingesetzt werden.

5. Verfahren nach Anspruch 1 und 3, **dadurch gekennzeichnet, daß** der plastifizierte Reib- und Stauchgrat (5) in der Abkühlungsphase der miteinander verbundenen Bauteile unter Aufzehrung der auf das Reibelement (1) übertragenen Rotationsenergie abgetragen wird.

6. Verfahren nach Anspruch 1, **dadurch gekennzeichnet, daß** das Reibelement eine, mit Mitteln zum Abtragen des entstandenen Reib- und Stauchgrates ausgestattete Reibscheibe (1) ist.

7. Verfahren nach Anspruch 6, **dadurch gekennzeichnet, daß** die Reibscheibe (1) Aussparungen (8; 9) aufweist, in denen Schneidwerkzeuge (10; 11) radial verstellbar angeordnet sind.

## Claims

1. Process for the connection of building components such as pipes, rods and similar semi-finished products by means of friction welding using a frictional element (1), that is located between the ends of the construction elements (23) to be connected and, for the purpose of generating the welding temperature through frictional heat while simultaneously placing pressure on the contact surfaces between the frictional elements and building components spun around a common axis of the building components and the frictional element and for the joining process jamming the connecting components after release of the spin with high pressure against each other, **characterized by** reaching the welding temperature within a quasi-stationary temperature range of the frictional process while suppressing the material of the frictional element from the surfaces involved in the friction process until mutual contact of the ends of the building components to be joined (23), then the building components (23) are jammed together with increased pressure and welded together as a result of compression and simultaneous removal of the friction and compression seam during the friction and compression process.

2. Process in accordance with claim 1, **characterized by** continuing when the welding temperature is reached and formation of a stationary temperature range in the area of the connection to the ends of the building components (23) that are to be connected in the process with almost constant spin with proportional reduction of length of the building components involved in the welding process up to complete suppression of the material of the friction element in the friction process of the involved contact surfaces.

3. Process in accordance with claim 1, **characterized by** the friction seam out of plasticized material from the frictional element (1) and the building components to be connected being continuously reformed during the friction process.

4. Process in accordance with claim 1 and 2, **characterized by** the erratically changing process parameters from the complete suppression of the material of the frictional element (1) are used for the process control.

5. Process in accordance with claim 1 and 3, **characterized by** the plasticized friction and compression seam (5) is removed in the cooling phase of the building components being connected with absorption of the rotation energy to the frictional element (1).

6. Process in accordance with claim 1, **characterized by** the friction element being a frictional disk (1) with the means to remove the friction and compression seam.

7. Process in accordance with claim 6, **characterized by** the friction disk (1) having notches (8; 9) in which the cutting tools (10; 11) can be placed and adjusted radially.

## Revendications

1. Procédé d'assemblage d'éléments de construction, tels que des tubes, des barres ou des produits semi-finis semblables, par soudage par friction, utilisant un élément de friction (1) disposé en joint entre les éléments de construction à assembler (2,3) qui, afin de produire la température de soudage grâce à la chaleur de friction sous l'action simultanée de forces de pression sur les surfaces de contact situées entre l'élément de friction et les extrémités des éléments de construction, tourne autour d'un axe commun à lui-même et aux éléments de construction, les éléments d'assemblage étant soumis, pour le processus de réunification, à des forces de pression opposées plus élevées après l'arrêt de la rotation, **caractérisé en ce que,** après obtention de la température de soudage comprise dans un champ de température quasiment stable, l'opération de friction est poursuivie jusqu'à ce que les extrémités des éléments de construction à réunir (2,3) se rejoignent suite à l'usure du matériau composant l'élément de friction situé sur les surfaces entrant dans le processus de friction, après cela, les éléments de construction (2,3) sont soumis à une pression de serrage plus élevée et sont soudés ensemble par refoulement, la bavure de friction et de refoulement se formant au cours de l'opération de friction et de refoulement étant enlevée simultanément.

2. Procédé selon la revendication 1, **caractérisé en ce que,** lors de l'obtention de la température de soudage et de la formation d'un champ de température stable dans le domaine de la jointure située aux extrémités des éléments de construction à assembler (2,3), l'opération de friction est poursuivie jusqu'à l'usure complète du matériau composant l'élément de friction situé sur les surfaces de contact entrant dans le processus de friction en appliquant un couple de friction presque constant pour une réduction proportionnelle de la longueur des éléments de construction (2,3) entrant dans le processus de soudage.

3. Procédé selon la revendication 1, **caractérisé en ce que** la bavure de friction composée du matériau plastifié composant l'élément de friction (1) et les éléments de construction à assembler est transformée en continu au cours du processus de friction.

4. Procédé selon la revendication 1 et 2, **caractérisée en ce que** les paramètres de processus variant brusquement suite à l'usure complète du matériau composant l'élément de friction (1) sont utilisés pour commander le processus.

5. Procédé selon la revendication 1 et 3, **caractérisé en ce que** la bavure de friction et de refoulement plastifiée (5) est enlevée, en phase de refroidissement des éléments de construction assemblés ensemble, pendant que l'énergie de rotation transmise à l'élément de friction (1) est consommée.

6. Procédé selon la revendication 1, **caractérisé en ce que** l'élément de friction est un disque de friction (1) équipé de moyens d'enlèvement de la bavure de friction et de refoulement qui s'est formée.

7. Procédé selon la revendication 6, **caractérisé en ce que** le disque de friction (1) présente des évidements (8; 9) dans lesquels sont disposés des outils coupants (10; 11) de façon susceptible de se déplacer radialement.
